# EUROPÄISCHE PATENTANMELDUNG

(11) **EP 0 919 426 A1**
(43) Veröffentlichungstag der Anmeldung: **02.06.1999**
(21) Anmeldenummer: 98120817.6
(22) Anmeldetag: 03.11.1998
(51) Int. Cl.: B60N 2/00, B60R 21/00

(54) **Anordnung und Verfahren zur Sitzbelegungserkennung in einem Fahrzeugsitz**

(30) Priorität: 28.11.1997 DE 19752822
(71) Anmelder: TEMIC TELEFUNKEN microelectronic GmbH, 74072 Heilbronn (DE)
(72) Erfinder: Baur, Richard, 85276 Pfaffenhofen (DE); Bischoff, Michael, 85111 Adelschlag (DE); Fendt, Günter, 86529 Schrobenhausen (DE); Hora, Peter, 86529 Schrobenhausen (DE); Schwehr, Stefan, Dr., 90408 Nürnberg (DE); Spreng, Klaus, 85055 Ingolstadt (DE); Steiner, Peter, Dr., 86529 Schrobenhausen (DE)
(74) Vertreter: Maute, Hans-Jürgen, Dipl.-Ing.

(57) **Zusammenfassung**

Bei intelligenten Insassenschutzvorrichtungen wird der Luftsack mit unterschiedlichen Druckanstiegskurven und nur soweit aufgeblasen, daß Verletzungen des Fahrers und der Passagiere unterbleiben. Eine wichtige Rolle für einen optimalen Aufblasvorgang spielt neben anderen Faktoren das Körpergewicht der durch die Insassenschutzvorrichtung zu schützenden Person, das es daher möglichst genau zu messen gilt.

Wenigstens ein belastungssensitives Sensorelement (4) wird zwischen Fahrzeugboden (3) und Fahrzeugsitz (1) angeordnet.

Sitzbelegungserkennung in einem Fahrzeug, damit bei intelligenten Insassenschutzvorrichtungen der Luftsack mit unterschiedlichen Druckanstiegskurven und nur soweit aufgeblasen wird, daß Verletzungen des Fahrers und der Passagiere unterbleiben.

## Beschreibung

Die Erfindung betrifft eine Anordnung und ein Verfahren zur Sitzbelegungserkennung in einem Fahrzeugsitz nach dem Oberbegriff der Patentansprüche 1 und 3.

Bei herkömmlichen Insassenschutzvorrichtungen wird im Fall eines Aufpralls ein Luftsack (Airbag) zwischen Fahrer und Lenkrad bzw. zwischen Passagier und den inneren, vorderen Verkleidungsteilen des Fahrzeugs aufgeblasen, der ein hartes Aufschlagen des Fahrers bzw. Passagiers mit dem Kopf verhindert. Jedoch kann es vorkommen, daß der Luftsack im Verhältnis zur Aufprallschwere zu schnell und/oder mit einer zu großen Gasmenge aufgeblasen wird, so daß der aufgeblasene Luftsack beim Fahrer oder Passagier Verletzungen verursacht.

Bei intelligenten Insassenschutzvorrichtungen wird der Luftsack mit unterschiedlichen Druckanstiegskurven und nur soweit aufgeblasen, daß Verletzungen des Fahrers und der Passagiere unterbleiben. Eine wichtige Rolle für einen optimalen Aufblasvorgang spielt neben anderen Faktoren das Körpergewicht der zu schützenden Person, das es daher durch die Insassenschutzvorrichtung möglichst genau zu messen gilt.

Eine Sitzbelegungserkennung nach dem Stand der Technik ist aus der deutschen Patentschrift DE 42 37 072 C1 bekannt. Hierbei wird eine sogenannte 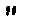 Sensormatte" verwendet, bei der innerhalb eines räumlich abgegrenzten, drucksensitiven Bereiches zwei zusammenlaminierte Polymerlagen zu kammartigen, interdigitierend angeordneten Elektroden ausgebildet sind. Mit zunehmender Normalkraft auf die Folienoberfläche nimmt der elektrische Widerstand der Elektroden ab, so daß mit einer Widerstandsmessung festgestellt werden kann, ob ein Sitz besetzt ist oder nicht.

Nachteilig ist, daß mit einer derartigen bekannten Sitzbelegungserkennung zwar eine Überprüfung, ob der betreffende Sitz besetzt ist oder nicht und auch eine Sitzpositionserkennung, jedoch keine exakte Gewichtsbestimmung möglich ist.

Ein Belastungssensor mit einer Stützstruktur und mindestens einer drahtförmigen Störstruktur, auf welcher mindestens eine Lichtleitfaser aufliegt, ist aus der deutschen Patentschrift DE 195 34 260 C1 bekannt und wird insbesondere zur Detektion von Fahrzeugen in einer Fahrbahndecke verlegt.

Es ist Aufgabe der Erfindung, eine Anordnung zur Sitzbelegungserkennung in einem Fahrzeugsitz anzugeben, mit der das exakte Gewicht einer auf dem Fahrzeugsitz sitzenden Person bestimmt werden kann.

Diese Aufgabe wird durch die kennzeichnenden Merkmale des Anspruchs 1 gelöst, wonach wenigstens ein belastungssensitives Sensorelement zwischen Fahrzeugboden und Fahrzeugsitz angeordnet ist.

Die Vorteile der Erfindung liegen darin, daß die Anordnung eine eindeutige Information über das Gewicht der auf dem betreffenden Fahrzeugsitz sitzenden Person liefert, unabhängig von deren Sitzposition.

Vorteilhafte Weiterbildungen der Erfindung sind in den Unteransprüchen beschrieben.

Ein Ausführungsbeispiel der Erfindung ist nachstehend ausführlich erläutert und anhand einer Figur dargestellt.

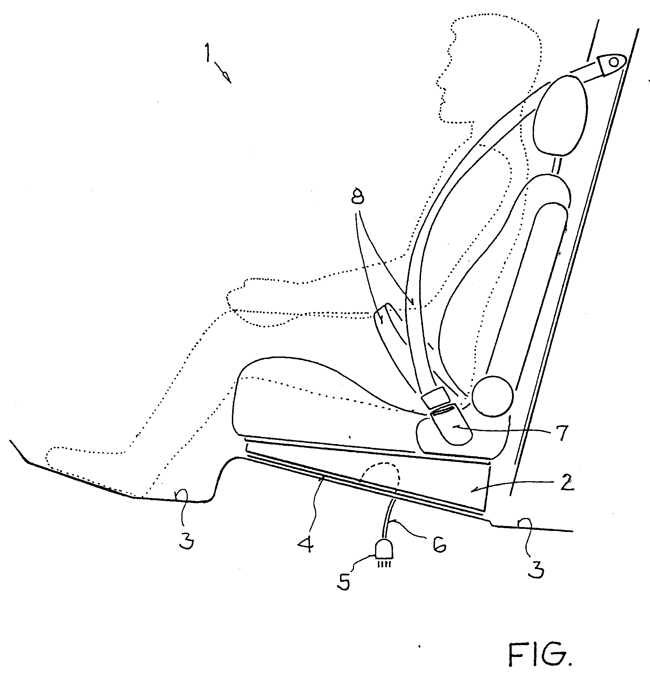

Die Figur zeigt einen Fahrzeugsitz **1**, der in einem Befestigungsbereich **2**, beispielsweise mittels Sitzschienen, an einem Fahrzeugboden **3** befestigt ist. Im Befestigungsbereich, beispielsweise zwischen Befestigungsbereich **2** des Fahrzeugsitzes **1** und Fahrzeugboden **3**, ist wenigstens ein Sensorelement **4** angeordnet, das mit dem Gewicht der auf dem Sitz sitzenden Person und dem Gewicht des Fahrzeugsitzes **1** belastet ist. Mittels eines Steckers **5** und einer Zuleitung **6** wird das Sensorelement **4** an eine (nicht dargestellte) Auswerteeinheit angeschlossen. An die Auswerteeinheit und an das Sensorelement **4** brauchen bezüglich Langzeitoffsetdrift und Alterung keine besonders hohen Anforderungen gestellt zu werden, da eine Nullpunktnachführung in kurzen Zeitabständen, beispielsweise durch Differenzmessung des unbelasteten Sensorelements **4,** problemlos durchgeführt werden kann.

Beispielsweise wird zu jedem Zeitpunkt, wenn das Fahrzeug mittels seiner Schließanlage geöffnet wird, das Leergewicht des Fahrzeugsitzes **1** gemessen und gespeichert, so daß in der Auswerteeinheit immer das exakte Gewicht einer auf dem Fahrzeugsitz **1** sitzenden Person ermittelt wird. Beim Sensorelement **4** handelt es sich vorzugsweise um einen seilförmigen, faseroptischen Belastungssensor, wie er in der deutschen Patentschrift DE 195 34 260 C1 beschrieben ist.

Bei einer leichten Person, beispielsweise einem Kind, kann es insbesondere dann zu einem wesentlichen Meßfehler kommen, wenn der zum Fahrzeugsitz **1** gehörende Sicherheitsgurt **8** sehr stramm angezogen ist, und der den Sicherheitsgurt **8** aufnehmende Gurtaufroller **7** an der Karosserie des Fahrzeugs befestigt ist.

Um solche Meßfehler zu verringern, weist der Fahrzeugsitz **1** einen integrierten Gurtaufroller **7** für den Sicherheitsgurt **8** auf. Zudem ist das zugehörige Gurtschloß (nicht dargestellt) ebenfalls am Fahrzeugsitz **1** befestigt, wie es seit langem Stand der Technik ist. Durch diese Anordnung von Gurtschloß und Gurtaufroller **7** kann das Gewicht einer auf dem Fahrzeugsitz **1** sitzenden Person exakt festgestellt werden, unabhängig davon, wie lose oder wie stramm der Sicherheitsgurt **8** angelegt ist.

Mit der beschriebenen Anordnung zur Sitzbelegungserkennung in einem Fahrzeugsitz kann zuverlässig das Gewicht einer auf dem Fahrzeugsitz **1** sitzenden Person ermittelt werden. Aufgrund der Kenntnis dieses Gewichtes können Insassenschutzvorrichtungen angepaßt ausgelöst oder eine Auslösung verhindert werden, insbesondere wenn der Fahrzeugsitz **1** mit einem Kind in einem Kindersitz besetzt ist.

## Patentansprüche

1. Anordnung zur Sitzbelegungserkennung in einem Fahrzeugsitz (1) eines Fahrzeugs mit einem belastungssensitiven Sensorelement (4) und einer Auswerteeinheit, **dadurch gekennzeichnet**, daß wenigstens ein Sensorelement (4) zwischen dem Fahrzeugboden (3) und dem Fahrzeugsitz (1) des Fahrzeugs angeordnet ist.

2. Anordnung nach Anspruch 1, **dadurch gekennzeichnet**, daß es sich bei dem Sensorelement (4) um einen seilförmigen, faseroptischen Belastungssensor handelt.

3. Verfahren zur sitzbelegungserkennung unter Verwendung der Anordnung nach Anspruch 1 oder 2, **dadurch gekennzeichnet**, daß die Auswerteeinheit eine Gewichtsmessung des unbelasteten Fahrzeugsitzes (1) immer dann durchführt, wenn das Fahrzeug geöffnet wird.

4. Fahrzeugsitz (1) mit einer Anordnung nach Anspruch 1 oder 2, **dadurch gekennzeichnet**, daß zur Verringerung von Meßfehlern der Fahrzeugsitz (1) einen integrierten Gurtaufroller (7) aufweist, und das zum Fahrzeugsitz (1) gehörende Gurtschloß am Fahrzeugsitz (1) befestigt ist.
